(19) **Europäisches Patentamt / European Patent Office / Office européen des brevets**

(11) **EP 4 570 429 A1**

(12) **EUROPEAN PATENT APPLICATION**
published in accordance with Art. 153(4) EPC

(43) Date of publication:
**18.06.2025 Bulletin 2025/25**

(21) Application number: **22954900.1**

(22) Date of filing: **08.08.2022**

(51) International Patent Classification (IPC):
**B23Q 17/09** (2006.01)

(52) Cooperative Patent Classification (CPC):
**B23Q 17/09; G05B 19/18; G05B 19/4155**

(86) International application number:
**PCT/JP2022/030298**

(87) International publication number:
**WO 2024/033978 (15.02.2024 Gazette 2024/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SUMITOMO ELECTRIC INDUSTRIES, LTD.**
**Osaka-shi, Osaka 541-0041 (JP)**

(72) Inventor: **IWASAKI, Rui**
**Osaka-shi, Osaka 541-0041 (JP)**

(74) Representative: **Boult Wade Tennant LLP**
**Salisbury Square House**
**8 Salisbury Square**
**London EC4Y 8AP (GB)**

(54) **ABNORMALITY DETECTION SYSTEM, ABNORMALITY DETECTION DEVICE, ABNORMALITY DETECTION METHOD, AND COMPUTER PROGRAM**

(57) An anomaly detection system configured to detect an anomaly in a tool mounted to a machine tool includes: a strain sensor configured to measure a strain that occurs in the tool while the machine tool is machining a workpiece by means of the tool; and an anomaly detection device configured to detect an anomaly in the tool, based on measurement data obtained by the strain sensor. The anomaly detection device includes: a classification unit being a machine-learned model and being configured to use, as an input, target data based on the measurement data obtained by the strain sensor and output a classification result of the target data; an anomaly detection unit configured to detect an anomaly in the tool, based on the classification result of the target data by the classification unit; and an output unit configured to output a detection result obtained by the anomaly detection unit.

FIG. 5

EP 4 570 429 A1

**Description**

**TECHNICAL FIELD**

The present disclosure relates to an anomaly detection system, an anomaly detection device, an anomaly detection method, and a computer program.

**BACKGROUND ART**

PATENT LITERATURE 1 discloses an anomaly detection device that detects an anomaly in a tool mounted to a machine tool. The anomaly detection device disclosed in PATENT LITERATURE 1: learns, according to a one-class SVM method, pieces of measurement data of vibration information, cutting force information, sound information, a spindle load, a motor current, and an electric power value of the tool, to create a normal model; and while acquiring measurement data during machining after the normal model has been created, diagnoses whether the measurement data is normal or anomalous, based on the normal model. Further, the anomaly detection device re-diagnoses the measurement data having been diagnosed to be anomalous, according to a method, such as an invariant analysis, that is different from the one-class SVM method.

**CITATION LIST**

[PATENT LITERATURE]

PATENT LITERATURE 1: Japanese Laid-Open Patent Publication No. 2018-024055

**SUMMARY OF THE INVENTION**

An anomaly detection system according to an aspect of the present disclosure is configured to detect an anomaly in a tool mounted to a machine tool and includes: a strain sensor configured to measure a strain that occurs in the tool while the machine tool is machining a workpiece by means of the tool; and an anomaly detection device configured to detect an anomaly in the tool, based on measurement data obtained by the strain sensor. The anomaly detection device includes: a classification unit being a machine-learned model, the classification unit being configured to use, as an input, target data based on the measurement data obtained by the strain sensor and output a classification result of the target data; an anomaly detection unit configured to detect an anomaly in the tool, based on the classification result of the target data by the classification unit; and an output unit configured to output a detection result obtained by the anomaly detection unit.

The present disclosure can be realized not only as an anomaly detection system including such a characteristic configuration as above, but also as an anomaly detection device included in the anomaly detection system, or as an anomaly detection method having steps of characteristic processes in the anomaly detection system. The present disclosure can be realized as a computer program that causes a computer to function as the anomaly detection device, or a part or the entirety of the anomaly detection device can be realized as a semiconductor integrated circuit.

**BRIEF DESCRIPTION OF DRAWINGS**

FIG. 1 shows an example of an entire configuration of an anomaly detection system according to an embodiment.
FIG. 2A shows an example of a configuration of a cutting tool according to the embodiment.
FIG. 2B shows another example of the configuration of the cutting tool according to the embodiment.
FIG. 2C shows another example of the configuration of the cutting tool according to the embodiment.
FIG. 2D shows another example of the configuration of the cutting tool according to the embodiment.
FIG. 3 shows an example of a configuration of a sensor module according to the embodiment.
FIG. 4 is a block diagram showing an example of a hardware configuration of an anomaly detection device according to the embodiment.
FIG. 5 is a function block diagram showing an example of the function of the anomaly detection device according to the embodiment.
FIG. 6 is a graph showing an example of the waveform in time series of the strain in the cutting tool.
FIG. 7 shows an example of a workpiece to be used in an intermittent cutting step.
FIG. 8A is a graph showing an example of the waveform in time series of the strain in the cutting tool in an intermittent cutting step.

FIG. 8B is a graph showing another example of the waveform in time series of the strain in the cutting tool in an intermittent cutting step.

FIG. 9 is a graph for describing an example of a learning period for a one-class classifier.

FIG. 10 is a diagram schematically showing an outline of a local outlier factor.

FIG. 11 shows an example of an anomaly notification screen.

FIG. 12 shows an example of an anomaly prediction screen.

FIG. 13 is a flowchart showing an example of an anomaly detection process performed by the anomaly detection device according to the embodiment.

FIG. 14 is a flowchart showing an example of a classification process of target data.

FIG. 15 is a graph for describing an example of a learning period for a multi-class classifier.

## DETAILED DESCRIPTION

<Problems to be solved by the present disclosure>

In the anomaly detection device disclosed in PATENT LITERATURE 1, a vibration sensor that measures vibration of the tool is used. However, since the vibration sensor measures vibration of the spindle, which is separated from the tool, it is difficult to accurately obtain vibration information useful for detecting an anomaly in the tool.

<Effects of the present disclosure>

According to the present disclosure, an anomaly in a tool can be detected by using information accurately reflecting the state of the tool mounted to a machine tool.

<Outline of embodiment of the present disclosure>

Hereinafter, outlines of an embodiment of the present disclosure will be listed and described.
(1) An anomaly detection system according to the present embodiment is configured to detect an anomaly in a tool mounted to a machine tool, and includes: a strain sensor configured to measure a strain that occurs in the tool while the machine tool is machining a workpiece by means of the tool; and an anomaly detection device configured to detect an anomaly in the tool, based on measurement data obtained by the strain sensor. The anomaly detection device includes: a classification unit being a machine-learned model, the classification unit being configured to use, as an input, target data based on the measurement data obtained by the strain sensor and output a classification result of the target data; an anomaly detection unit configured to detect an anomaly in the tool, based on the classification result of the target data by the classification unit; and an output unit configured to output a detection result obtained by the anomaly detection unit. Accordingly, an anomaly in the tool can be detected by using the strain, in the tool, which is information accurately reflecting the state of the tool.

(2) In (1) above, the strain sensor may be mounted to the tool. Accordingly, the strain in the tool can be directly measured by the strain sensor.

(3) In (2) above, the tool may be a cutting tool including a milling tool or a rotating tool, and
the strain sensor and a wireless communication unit configured to wirelessly transmit the measurement data obtained by the strain sensor may be mounted to the cutting tool. Accordingly, with the strain sensor mounted to a milling tool in which the tool itself does not rotate or a rotating tool in which the tool itself rotates, the measurement data can be wirelessly transmitted.

(4) In any one of (1) to (3) above, the classification unit may be a one-class classification unit configured to perform one-class classification, and the anomaly detection unit may detect an anomaly in the tool, based on an anomaly degree generated in the one-class classification. Accordingly, an anomaly in the tool can be detected by using a one-class classification unit constructed through unsupervised learning.

(5) In (4) above, the anomaly detection unit may compare the anomaly degree with a plurality of thresholds to perform multi-class classification of the target data, and may detect an anomaly in the tool, based on a result of the multi-class classification. Therefore, an anomaly in the tool can be accurately detected by using the result of the multi-class classification of the target data.

(6) In (5) above, the anomaly detection unit may compare the anomaly degree with a first threshold and a second threshold, to classify the target data into a normal state, an imminent-anomaly state, and an anomalous state. Accordingly, the target data can be finely classified by using the anomaly degree.

(7) In (6) above, when the target data has been classified into the anomalous state by the anomaly detection unit, the output unit may output information for making a notification that the tool is anomalous. Thus, it is possible to notify a user of an anomaly in the tool.

(8) In (6) above, when the target data has been classified into the imminent-anomaly state by the anomaly detection unit, the output unit may output information for making a notification that occurrence of an anomaly in the tool is predicted. Thus, it is possible to notify the user that occurrence of an anomaly in the tool is predicted.

(9) In any one of (6) to (8) above, the first threshold for distinguishing the target data between the normal state and the imminent-anomaly state may be determined based on target data based on measurement data obtained by the strain sensor just before the tool becomes anomalous. Accordingly, by using the first threshold determined based on actually measured data, whether the tool is in the normal state or the imminent-anomaly state can be accurately distinguished.

(10) In any one of (1) to (9) above, the anomaly detection device may detect an anomaly in the tool, based on measurement data of a strain in the tool in an intermittent cutting step in which cutting and non-cutting of the workpiece are repeated. In the intermittent cutting step, the state of the tool is more easily expressed in the strain than in a continuous machining step in which cutting of the workpiece is continuously performed. Therefore, an anomaly in the tool can be accurately detected.

(11) An anomaly detection device according to the present embodiment is configured to detect an anomaly in a tool mounted to a machine tool, and includes: an acquisition unit configured to acquire target data based on measurement data outputted from a strain sensor configured to measure a strain that occurs in the tool while the machine tool is machining a workpiece by means of the tool; a classification unit being a machine-learned model, the classification unit being configured to use, as an input, the target data acquired by the acquisition unit and output a classification result of the target data; an anomaly detection unit configured to detect an anomaly in the tool, based on the classification result of the target data by the classification unit; and an output unit configured to output a detection result obtained by the anomaly detection unit. Accordingly, an anomaly in the tool can be detected by using the strain, in the tool, which is information accurately reflecting the state of the tool.

(12) An anomaly detection method according to the present embodiment is to be executed by an anomaly detection device configured to detect an anomaly in a tool mounted to a machine tool. The anomaly detection method includes: a step of acquiring target data based on measurement data outputted from a strain sensor configured to measure a strain that occurs in the tool while the machine tool is machining a workpiece by means of the tool; a step of classifying the target data by a classification unit being a machine-learned model, the classification unit being configured to use, as an input, the target data having been acquired and output a classification result of the target data; a step of detecting an anomaly in the tool, based on the classification result of the target data by the classification unit; and a step of outputting a detection result of the anomaly in the tool. Accordingly, an anomaly in the tool can be detected by using the strain, in the tool, which is information accurately reflecting the state of the tool.

(13) A computer program according to the present embodiment is for detecting an anomaly in a tool mounted to a machine tool. The computer program causes a computer to execute: a step of acquiring target data based on measurement data outputted from a strain sensor configured to measure a strain that occurs in the tool while the machine tool is machining a workpiece by means of the tool; a step of classifying the target data by using a classification unit being a machine-learned model, the classification unit being configured to use, as an input, the target data having been acquired and output a classification result of the target data; a step of detecting an anomaly in the tool, based on the classification result of the target data by the classification unit; and a step of outputting a detection result of the anomaly in the tool. Accordingly, an anomaly in the tool can be detected by using the strain, in the tool, which is information accurately reflecting the state of the tool.

<Details of embodiment of the present disclosure>

Hereinafter, details of an embodiment of the present invention will be described with reference to the drawings. At least parts of the embodiment described below may be combined as desired.

[1. Anomaly detection system]

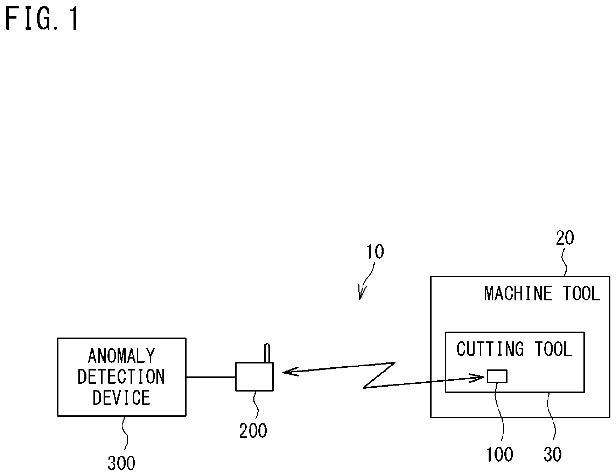

FIG. 1 shows an example of an entire configuration of an anomaly detection system according to the present embodiment. An anomaly detection system 10 detects an anomaly in a cutting tool 30 of a machine tool 20. The cutting tool 30 is mounted to the machine tool 20. The machine tool 20 performs cutting machining on a workpiece by using the cutting tool 30. "Cutting machining" here includes: "milling machining" in which a workpiece that is rotating is cut by the cutting tool 30; and "rotating machining" in which a workpiece that is fixed is cut by the cutting tool 30 that is rotating. The machine tool 20 may be a milling machine such as a lathe, or may be a rotating machine such as a milling machine.

The anomaly detection system 10 includes the cutting tool 30, a wireless device 200, and an anomaly detection device 300. The wireless device 200 is connected to the anomaly detection device 300 in a wired manner, for example. The wireless device 200 is an access point, for example.

The cutting tool 30 includes a sensor module 100. As described later, the sensor module 100 includes a sensor.

The configuration of the anomaly detection system 10 is not limited to a configuration of including a single cutting tool 30, and the anomaly detection system 10 may include a plurality of the cutting tools 30.

The cutting tool 30 transmits a measurement result obtained by the sensor in the sensor module 100 to the anomaly detection device 300 in time series.

More specifically, the cutting tool 30 wirelessly transmits a radio signal including a packet storing a measurement value, to the wireless device 200.

The wireless device 200 acquires the packet included in the radio signal received from the cutting tool 30, and relays the packet to the anomaly detection device 300.

Upon receiving the sensor packet from the cutting tool 30 via the wireless device 200, the anomaly detection device 300 acquires measurement information from the received sensor packet, and processes the acquired measurement information.

The cutting tool 30 and the wireless device 200 perform wireless communication using a communication protocol such as ZigBee (registered trademark) according to IEEE 802.15.4, Bluetooth (registered trademark) according to IEEE 802.15.1, or UWB (Ultra Wide Band) according to IEEE 802.15.3a, for example. Between the cutting tool 30 and the wireless device 200, a communication protocol other than the above may be used.

[2. Specific example of cutting tool]

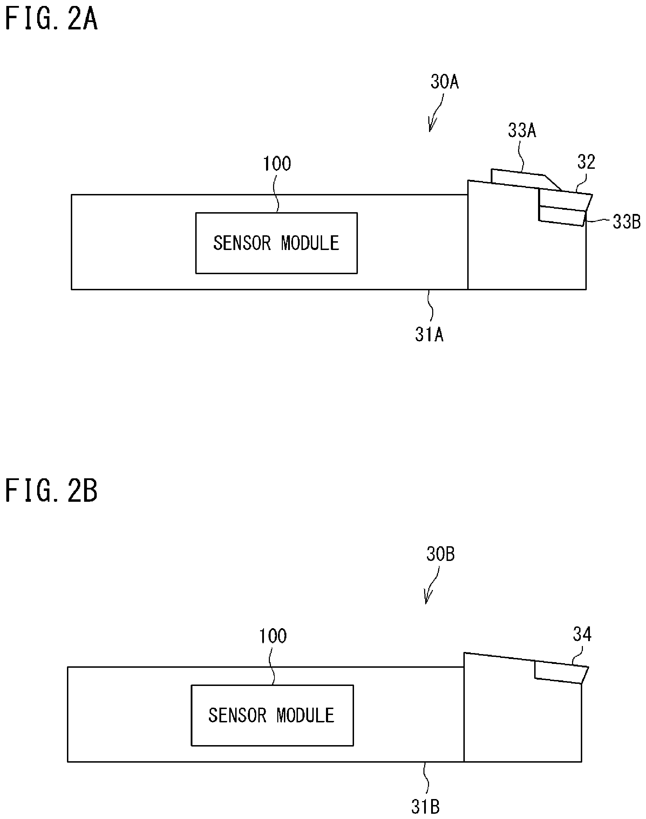

FIG. 2A shows an example of a configuration of the cutting tool according to the present embodiment.

A milling tool 30A, which is an example of the cutting tool 30, is a tool for milling machining to be used in machining of a workpiece that is rotating, and is mounted to a machine tool such as a lathe. The milling tool 30A includes a cutting part 31A and the sensor module 100 provided to the cutting part 31A.

For example, the cutting part 31A can have mounted thereto a cutting insert 32 having a cutting blade. Specifically, the cutting part 31A is a shank that holds the cutting insert 32. That is, the milling tool 30A is a so-called throw-away cutting tool.

More specifically, the cutting part 31A includes clamping members 33A, 33B. The clamping members 33A, 33B hold the cutting insert 32.

In a top view, the cutting insert 32 has a polygonal shape such as a triangle, a square, a rhombus, or a pentagon, for example. For example, the cutting insert 32 has a through-hole formed at the center of the top face of the cutting insert 32, and is fixed to the cutting part 31A by the clamping members 33A, 33B.

FIG. 2B shows another example of the configuration of the cutting tool according to the present embodiment.

A milling tool 30B, which is an example of the cutting tool 30, is a tool for milling machining, and is mounted to a machine tool such as a lathe. The milling tool 30B includes a cutting part 31B and the sensor module 100 provided to the cutting part 31B.

For example, the cutting part 31B has a cutting blade 34. That is, the milling tool 30B is a solid cutting tool or a brazed cutting tool.

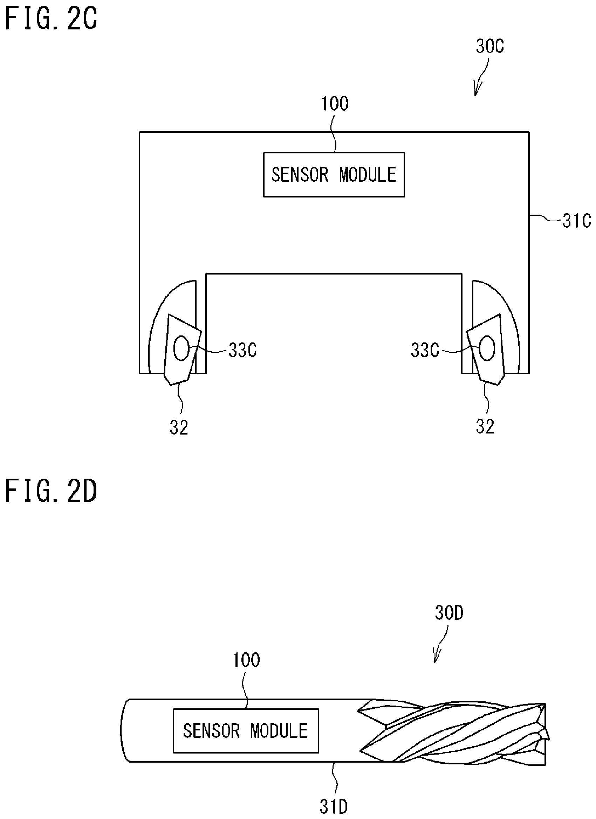

FIG. 2C shows another example of the configuration of the cutting tool according to the present embodiment. FIG. 2C shows a cross-sectional view of the cutting tool.

A rotating tool 30C, which is an example of the cutting tool 30, is a tool for rotating machining to be used in machining of a workpiece that is fixed, and is mounted to a machine tool such as a milling machine. The rotating tool 30C includes a cutting part 31C and the sensor module 100 provided to the cutting part 31C.

For example, the cutting part 31C can have mounted thereto the cutting insert 32 having a cutting blade. Specifically, the cutting part 31C is a holder that holds the cutting insert 32. That is, the rotating tool 30C is a so-called milling cutter.

More specifically, the cutting part 31C includes a plurality of clamping members 33C. Each clamping member 33C holds the cutting insert 32.

The cutting inserts 32 are fixed to the cutting part 31C by the clamping members 33C.

FIG. 2D shows another example of the configuration of the cutting tool according to the present embodiment.

A rotating tool 30D, which is an example of the cutting tool 30, is a tool for rotating machining, and is mounted to a machine tool such as a milling machine. The rotating tool 30D includes a cutting part 31D, and the sensor module 100 provided to the cutting part 31D.

For example, the cutting part 31D has a cutting blade 35. That is, the rotating tool 30D is an end mill.

[3. Sensor module]

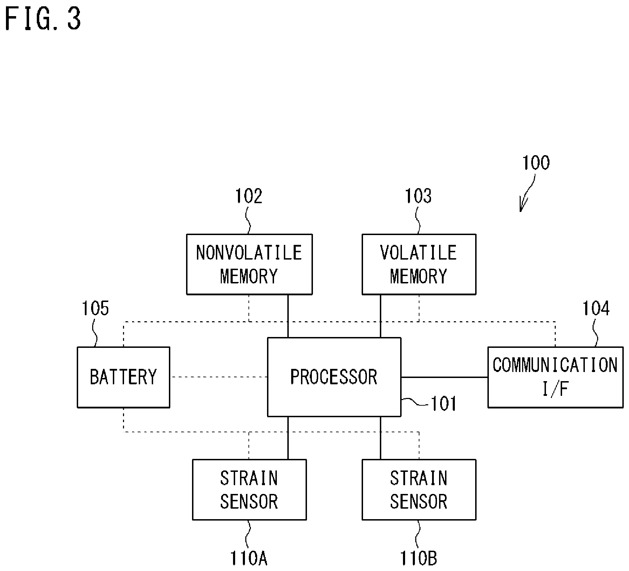

FIG. 3 shows an example of a configuration of the sensor module according to the present embodiment.

The sensor module 100 includes a processor 101, a nonvolatile memory 102, a volatile memory 103, a communication interface (I/F) 104, and strain sensors 110A, 110B.

The volatile memory 103 is a volatile memory such as an SRAM (Static Random Access Memory) or a DRAM (Dynamic Random Access Memory), for example. The nonvolatile memory 102 is a nonvolatile memory such as a flash memory or a ROM (Read Only Memory), for example. For example, the nonvolatile memory 102 has stored therein a computer program (not shown) and data to be used in execution of the computer program. The computer program is a program for transmitting, in time series, the measurement values obtained by the strain sensors 110A, 110B.

The processor 101 is a CPU (Central Processing Unit), for example. However, the processor 101 is not limited to a CPU. The processor 101 may be a GPU (Graphics Processing Unit). In a specific example, the processor 101 is a multicore GPU. For example, the processor 101 may be an ASIC (Application Specific Integrated Circuit), or may be a programmable logic device such as a gate array or an FPGA (Field Programmable Gate Array).

The communication I/F 104 is a communication interface for a communication protocol such as ZigBee according to IEEE 802.15.4, Bluetooth according to IEEE 802.15.1, or UWB according to IEEE 802.15.3a, for example. The communication I/F 104 is realized by a communication circuit such as a communication IC (Integrated Circuit), for example.

The sensor module 100 includes a battery 105. The battery 105 supplies electric power to the processor 101, the nonvolatile memory 102, the volatile memory 103, the communication I/F 104, and the strain sensors 110A, 110B.

The strain sensors 110A, 110B are provided in the vicinity of the cutting blade in the cutting tool 30, for example. The strain sensors 110A and 110B are mounted to the cutting tool 30 so as to measure strains in directions different from each other. For example, the strain sensor 110A measures a strain in the longitudinal direction of the cutting tool 30, and the strain sensor 110B measures a strain in the width direction of the cutting tool 30. In the following, the strain sensors 110A, 110B will also be collectively referred to as a strain sensor 110. The strain sensor 110 is an example of a sensor. The sensor is driven with electric power supplied from the battery 105.

The configuration of the sensor module 100 is not limited to the configuration of including two strain sensors 110, and the sensor module 100 may include one or three or more strain sensors 110. Instead of the strain sensor 110 or in addition to the strain sensor 110, the sensor module 100 may include other sensors such as an acceleration sensor, a pressure sensor, a sound sensor, and a temperature sensor.

[4. Hardware configuration of anomaly detection device]

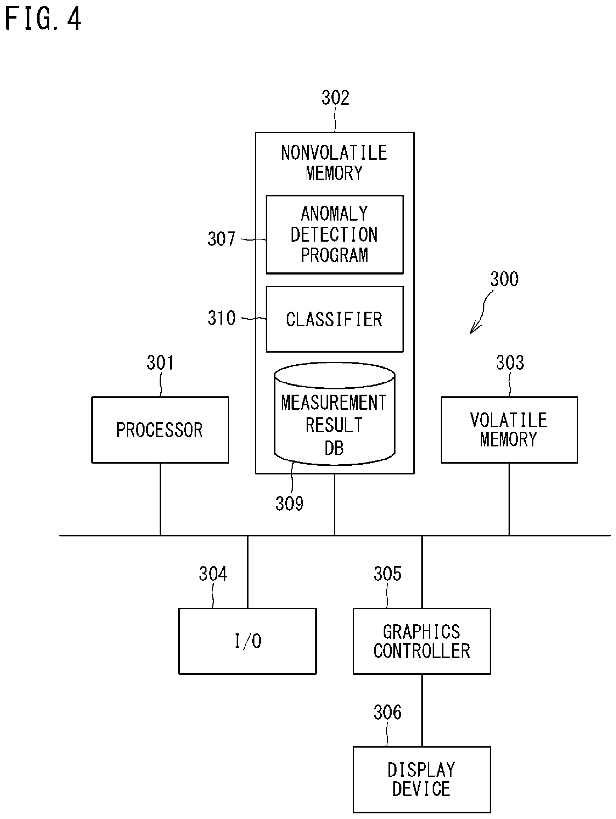

FIG. 4 is a block diagram showing an example of a hardware configuration of the anomaly detection device according to the present embodiment.

The anomaly detection device 300 includes a processor 301, a nonvolatile memory 302, a volatile memory 303, an input/output interface (I/O) 304, a graphics controller 305, and a display device 306.

The volatile memory 303 is a volatile memory such as an SRAM or a DRAM, for example. The nonvolatile memory 302 is a nonvolatile memory such as a flash memory, a hard disk, or a ROM, for example. The nonvolatile memory 302 has stored therein an anomaly detection program 307, which is a computer program, and data to be used in execution of the anomaly detection program 307. Each function of the anomaly detection device 300 is realized by the anomaly detection program 307 being executed by the processor 301. The anomaly detection program 307 can be stored in a storage medium such as a flash memory, a ROM, or a CD-ROM.

The nonvolatile memory 302 is provided with a measurement result database (DB) 309. The measurement result DB 309 stores measurement results obtained by the strain sensor 110. More specifically, in the measurement result DB 309, measurement values of the strain outputted from the strain sensor 110 are accumulated in time series in each constant sampling cycle.

The nonvolatile memory 302 has stored therein a classifier 310. The classifier 310 is a machine-learned model, and is an example of a classification unit. The classifier 310 will be described later.

The processor 301 is a CPU, for example. The processor 301 may be one or a plurality of CPUs. However, the processor 301 is not limited to a CPU. The processor 301 may be a GPU. In a specific example, the processor 301 is a multicore GPU. For example, the processor 301 may be an ASIC, or may be a programmable logic device such as a gate array or an FPGA. In this case, the ASIC or the programmable logic device is configured to be able to execute the same processes as the anomaly detection program 307.

The I/O 304 is connected to the wireless device 200. For example, the I/O 304 is a communication I/F, and can perform communication according to a specific communication protocol. The I/O 304 includes an Ethernet interface ("Ethernet" is a registered trademark), for example. The I/O 304 can receive a measurement result obtained by the strain sensor 110 from the cutting tool 30 via the wireless device 200.

The graphics controller 305 is connected to the display device 306, and controls display on the display device 306. For example, the graphics controller 305 includes a GPU and a VRAM (Video RAM), holds, in the VRAM, data to be displayed on the display device 306, periodically reads out video data corresponding to one frame from the VRAM, and generates a video signal. The generated video signal is outputted to the display device 306, and the video is displayed on the display device 306. The function of the graphics controller 305 may be included in the processor 301. A partial region of the volatile memory 303 may be used as the VRAM.

The display device 306 includes a liquid crystal panel or an OEL (organic electroluminescence) panel, for example. The display device 306 can display information of characters or figures.

[5. Function of anomaly detection device]

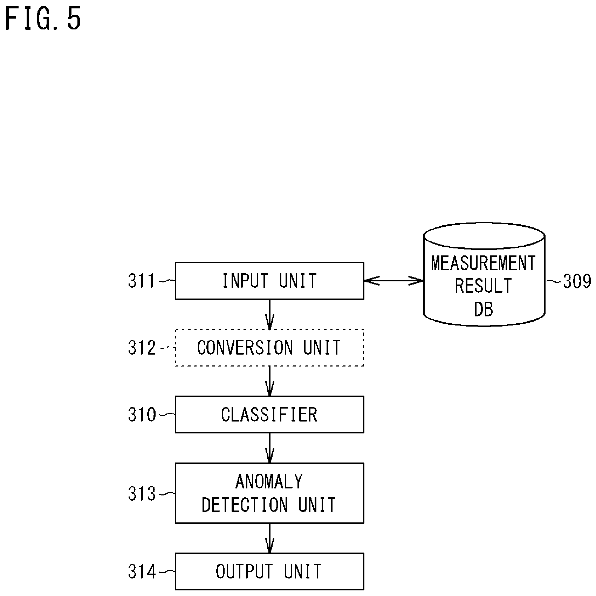

FIG. 5 is a function block diagram showing an example of the function of the anomaly detection device according to the embodiment. The anomaly detection device 300 has functions of the classifier 310, an input unit 311, an anomaly detection unit 313, and an output unit 314.

The input unit 311 acquires measurement data of the strain that occurs in the cutting tool 30 while the machine tool 20 is machining a workpiece by means of the cutting tool 30. The input unit 311 receives measurement data of the strain from the measurement result DB 309. The measurement data is data of the measurement value obtained by the strain sensor 110, and is time-series data of the measurement value of the strain, for example.

The classifier 310 is a machine-learned model. The classifier 310 uses, as an input, target data based on the measurement data of the strain in the cutting tool 30 during the time when the machine tool 20 is machining the workpiece by means of the cutting tool 30, and outputs a classification result of the target data.

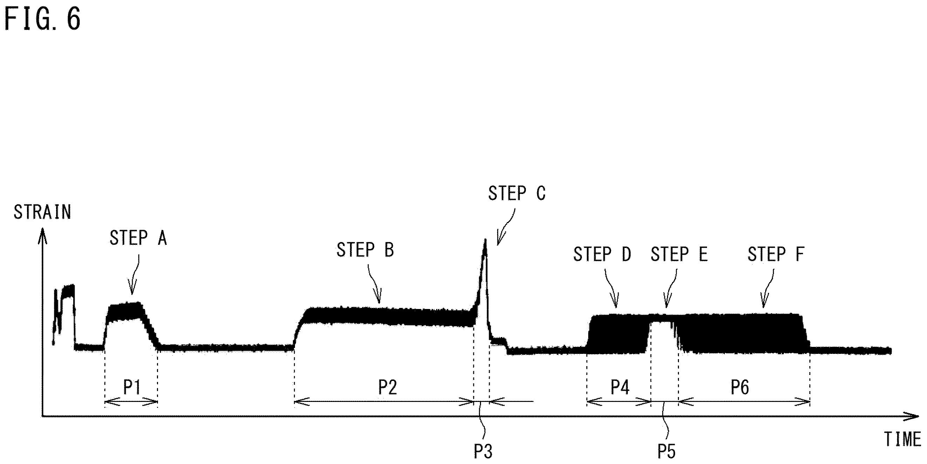

FIG. 6 is a graph showing an example of the waveform in time series of the strain in the cutting tool. In FIG. 6, the vertical axis represents strain and the horizontal axis represents time. Cutting machining of the workpiece includes a plurality of steps having different machining conditions. For example, milling machining by means of a lathe onto one workpiece includes outer diameter machining steps for a plurality of outer diameters, and inner diameter machining steps for a plurality of inner diameters. In a series of cutting machining, in each step, the waveform pattern of the measurement value of the strain in the cutting tool 30 changes. In the example in FIG. 6, cutting machining of one workpiece includes a step A, a step B, a step C, a step D, a step E, and a step F. The step A is executed in a period P1, the step B is executed in a period P2, the step C is executed in a period P3, the step D is executed in a period P4, the step E is executed in a period P5, and the step F is executed in a period P6. The respective machining conditions of the step A, the step B, the step C, the step D, the step E, and the step F are different from each other. Therefore, the respective waveform patterns of the strain in the step A, the step B, the step C, the step D, the step E, and the step F are different from each other.

The anomaly detection device 300 analyzes measurement data of one step (hereinafter, also referred to as "target step") selected from a plurality of steps as above, and detects an anomaly in the cutting tool 30. In a specific example, the target step is an intermittent cutting step in which cutting and non-cutting of the workpiece are repeated.

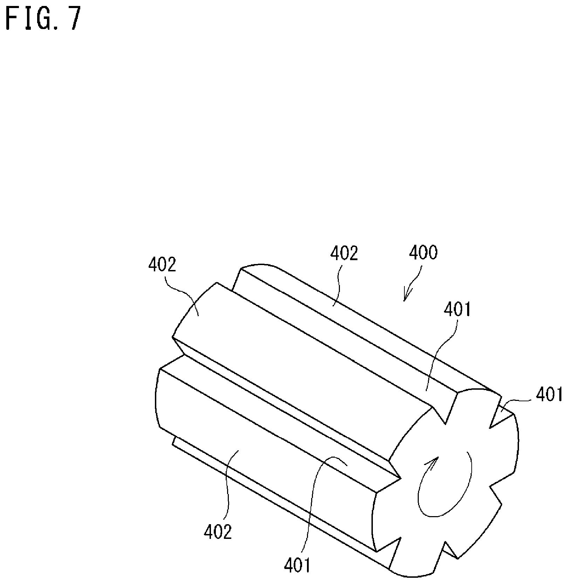

FIG. 7 shows an example of the workpiece to be used in the intermittent cutting step. A workpiece 400 has a plurality of grooves 401 extending in the axis direction on the outer periphery of a circular column. That is, in the workpiece 400, a circular arc surface 402 and a groove 401 are alternately arranged in the circumferential direction. In an outer diameter machining step for such a workpiece 400, the workpiece 400 rotates in the circumferential direction (arrow direction), and the cutting tool 30 machines the outer peripheral surface of the workpiece 400. The cutting blade of the cutting tool 30 repeats contact (cutting) with the circular arc surface 402 and passing (non-cutting) through the groove 401.

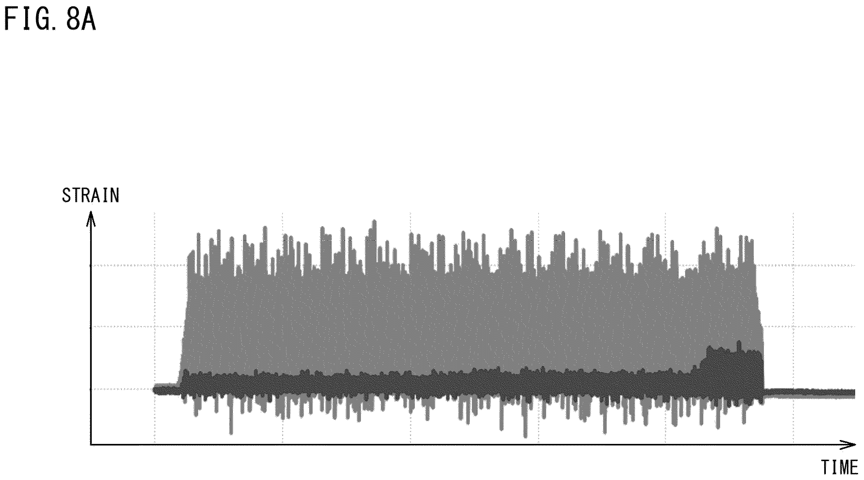

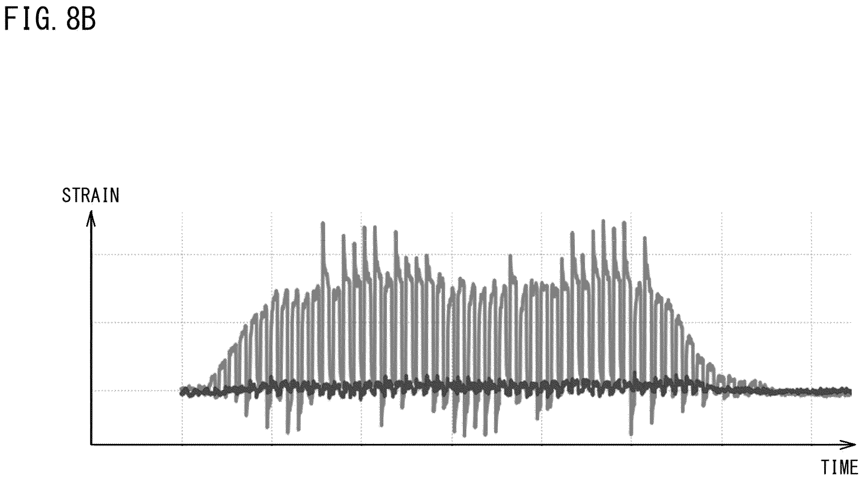

FIG. 8A is a graph showing an example of the waveform in time series of the strain in the cutting tool in an intermittent cutting step. FIG. 8B is a graph showing another example of the waveform in time series of the strain in the cutting tool in an intermittent cutting step. FIG. 8A is a graph when the measurement time is 14 seconds, and FIG. 8B is a graph when the measurement time is 1.5 seconds. In FIG. 8A and FIG. 8B, the vertical axis represents strain and the horizontal axis represents time. The scale (the length corresponding to the unit time) of the time axis in FIG. 8B is larger than the scale of the time axis in FIG. 8A. In a continuous machining step in which cutting of the workpiece continues, even when an anomaly has occurred in the cutting tool 30, a constant strain is stably caused in the cutting tool 30. In contrast, in the intermittent cutting step, no strain is caused in the cutting tool 30 during non-cutting, and a strain is caused in the cutting tool 30 during cutting. That is, a state where a strain is caused in the cutting tool 30 and a state where no strain is caused are repeated. As shown in FIG. 8B in particular, in a measurement result of the strain in the cutting tool during the intermittent cutting step, a high value (cutting) and a low value (non-cutting) are alternately repeated. Therefore, an anomaly having occurred in the cutting tool 30 appears as a variation in the strain in the cutting tool 30, for example. Therefore, if the measurement result of the strain in the intermittent cutting step is used, an anomaly in the cutting tool 30 can be accurately detected.

With reference back to FIG. 5, the target data is feature data including a feature amount of the measurement value of the strain in the cutting tool 30, for example. The anomaly detection device 300 further has a function of a conversion unit 312. The conversion unit 312 converts the measurement value of the strain into a feature amount, to generate target data.

The feature amount of the strain is the moving average value of the measurement value of the strain, for example. Another example of the feature amount of the strain is the moving standard deviation of the measurement value of the strain. Still another example of the feature amount of the strain is the difference in percentile of the measurement value of the strain, and a specific example thereof is the difference between the 95th percentile and the 5th percentile. Still another example of the feature amount of the strain is the RMS (root mean square) of a value obtained by filtering the measurement value of the strain with a band-pass filter.

The target data may be measurement data (so-called raw data) of the strain in the cutting tool 30. In this case, the conversion unit 312 may be omitted.

The classifier 310 is a one-class classifier (one-class classification unit). The classifier 310 being a one-class classifier is constructed through unsupervised learning.

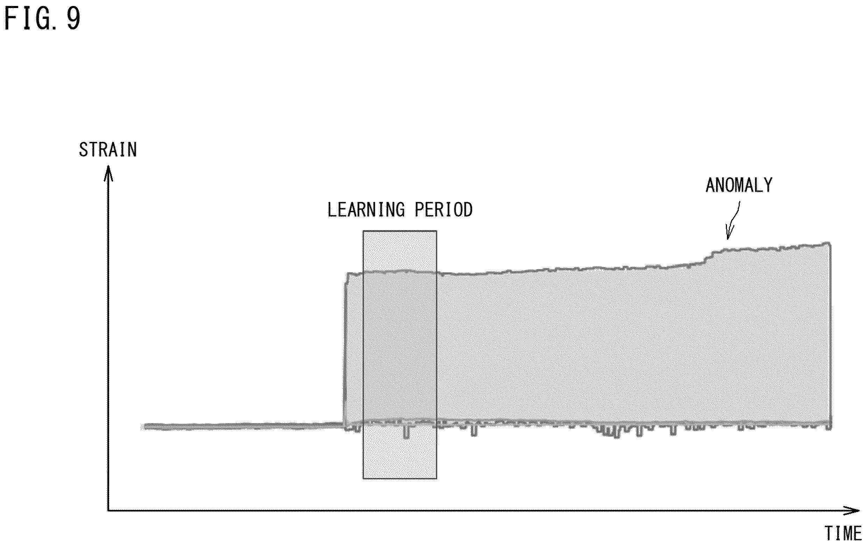

FIG. 9 is a graph for describing an example of a learning period for a one-class classifier. In FIG. 9, the vertical axis represents strain and the horizontal axis represents time. In FIG. 9, at the time point (hereinafter, referred to as "anomaly occurrence point") indicated as "anomaly", an anomaly in the cutting tool 30 has occurred. In the graph in FIG. 9, from the initial time of the machining up to before the anomaly occurrence point, the cutting tool 30 is normal. The learning period is set to a period in which the cutting tool 30 is normal. That is, in the learning by the classifier 310, out of the measurement data stored in the measurement result DB 309, measurement data in the learning period is used as learning data. Accordingly, the classifier 310 can grasp the feature of measurement data (hereinafter, also referred to as "normal-time data") when the cutting tool 30 is normal, and can distinguish, from the normal-time data, measurement data (hereinafter, also referred to as "anomalous-time data") when the cutting tool 30 is anomalous, the measurement data having a feature different from the feature of the normal-time data.

For example, the classifier 310 is a local outlier factor (LOF). In the following, the classifier 310 being a local outlier factor will be described.

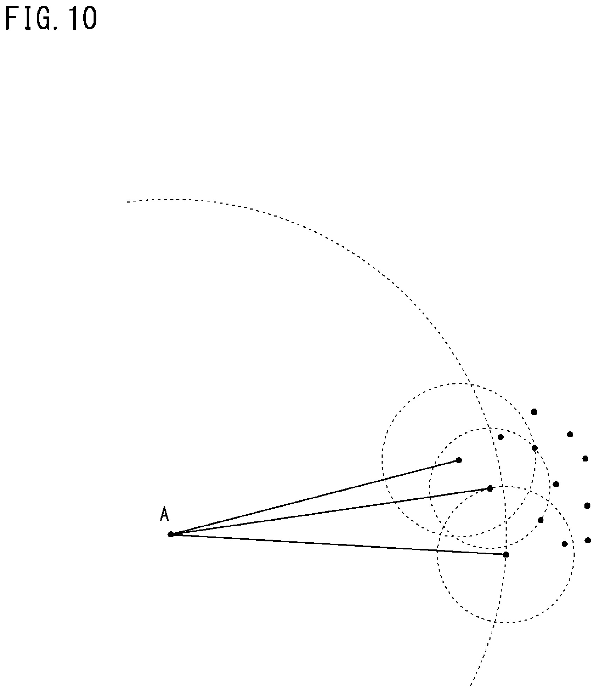

FIG. 10 is a diagram schematically showing an outline of a local outlier factor. The LOF is one of outlier detection algorithms that detect an outlier from a set of data. In the LOF, with respect to each point, a local density (indicated by broken line circles in the drawing) is calculated from the distance from k neighbor points, and the local density of a point of interest A and those of the neighbors are compared. When the local density of the point of interest is low, it is determined that the point of interest is an anomalous value (outlier).

The LOF will be specifically described. A k-distance(A) is defined as the distance from a point A to the k-th neighbor point, and $N_k(A)$ is defined as a set of k nearest neighbor points. A reachability-distance$_k$(A, B) of the point A from a point B is defined by Formula (1).

[Math. 1]

$$\text{reachability-distance}_k(A, B) = \max\{\text{k-distance}(B), d(A, B)\} \quad \cdots (1)$$

A local reachability density lrd$_k$(A) of the point A is defined by Formula (2).

[Math. 2]

$$\text{lrd}_k(A) := 1 / \left( \frac{\sum_{B \in N_k(A)} \text{reachability-distance}_k(A, B)}{|N_k(A)|} \right) \quad \cdots (2)$$

Further, the LOF of the point A is defined by Formula (3).

[Math. 3]

$$\text{LOF}_k(A) := \frac{\sum_{B \in N_k(A)} \frac{\text{lrd}(B)}{\text{lrd}(A)}}{|N_k(A)|} \quad \cdots (3)$$

The calculated LOF indicates the degree of equality between the local density of the point of interest A and the local density of neighbor points. The lower the LOF is, the higher the local density of the point of interest A is, and there is a high possibility that the point of interest A is normal data. The higher the LOF is, the lower the local density of the degree of interest A is, and there is a high possibility that the point of interest A is anomalous data. That is, the LOF is an outlier score, and is an example of an anomaly degree.

The classifier 310 is not limited to LOF. The classifier 310 may be a one-class classifier other than LOF. For example, the classifier 310 may be Isolation Forest. Still another example of the classifier 310 is a one-class SVM.

With reference back to FIG. 5, the anomaly detection unit 313 detects an anomaly in the cutting tool 30, based on a classification result of the target data by the classifier 310. Specifically, the anomaly detection unit 313 detects an anomaly in the cutting tool 30, based on an anomaly degree generated in one-class classification performed by the classifier 310.

More specifically, the anomaly detection unit 313 compares the anomaly degree with a plurality of thresholds to perform multi-class classification of the target data, and detects an anomaly in the cutting tool 30, based on the result of the multi-class classification.

In a specific example, the anomaly detection unit 313 compares the anomaly degree with a first threshold and a second threshold, to classify the target data into a normal state, an imminent-anomaly state, and an anomalous state. The first threshold is used in order to distinguish the target data between a normal class, and a set of an imminent-anomaly class and an anomalous class. The normal class is a class for target data for which the cutting tool 30 is normal, the anomalous class is a class for target data for which the cutting tool 30 is anomalous, and the imminent-anomaly class is a class for target data for which the cutting tool 30 is in a state just before an anomaly occurs. The normal state here is a state where the workpiece can be normally machined by the cutting tool 30, and is a state where an anomaly does not occur for a while even if the cutting tool 30 is continued to be used as it is. The anomalous state is a state where the workpiece cannot be normally machined by the cutting tool 30. The imminent-anomaly state is an intermediate state between the normal state and the anomalous state of the cutting tool 30, and is a state where the workpiece can be normally machined by the cutting tool 30 but an anomaly will soon occur if the cutting tool 30 is continued to be used as it is.

The first threshold is a value smaller than the second threshold. When the anomaly degree (LOF) is equal to or smaller than the first threshold, the target data belongs to the normal class. When the anomaly degree is larger than the first threshold, the target data belongs to the imminent-anomaly class or the anomalous class. When the anomaly degree is equal to or smaller than the second threshold, the target data belongs to the normal class or the imminent-anomaly class. When the anomaly degree is larger than the second threshold, the target data belongs to the anomalous class. That is, when the anomaly degree is larger than the first threshold and is equal to or smaller than the second threshold, the target data belongs to the imminent-anomaly class.

When the classifier 310 is LOF, the first threshold is 1, for example, and the second threshold is a value larger than 1, and is, for example, 1.25.

When the anomaly degree is larger than the second threshold, the anomaly detection unit 313 detects an anomaly in the cutting tool 30. When the anomaly degree is larger than the first threshold and is equal to or smaller than the second threshold, the anomaly detection unit 313 can determine that the cutting tool 30 is in the imminent-anomaly state. That is, the anomaly detection unit 313 can predict occurrence of an anomaly in the cutting tool 30.

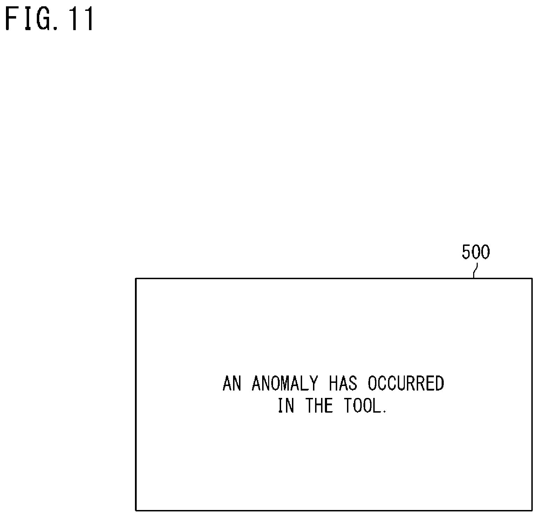

The output unit 314 outputs a detection result regarding the anomaly in the cutting tool 30 by the anomaly detection unit 313. In a specific example, when the anomaly detection unit 313 has detected an anomaly in the cutting tool 30, the output unit 314 outputs information for notifying a user of occurrence of the anomaly. For example, the output unit 314 causes the display device 306 to display a screen (hereinafter, also referred to as "anomaly notification screen") for making a notification of occurrence of an anomaly in the cutting tool 30. FIG. 11 shows an example of the anomaly notification screen. An anomaly notification screen 500 includes characters, a figure, a color, or a combination of these for making a notification of occurrence of an anomaly in the cutting tool 30. In the example in FIG. 11, the anomaly notification screen 500 includes characters of "An anomaly has occurred in the tool." Thus, it is possible to notify the user of the anomaly in the cutting tool 30.

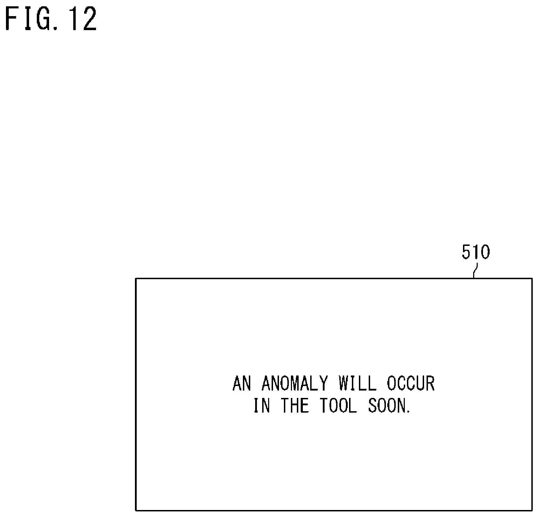

In another example, when the anomaly detection unit 313 has predicted occurrence of an anomaly in the cutting tool 30, the output unit 314 outputs information for notifying the user that occurrence of an anomaly is predicted. For example, the output unit 314 causes the display device 306 to display a screen for making a notification that occurrence of an anomaly in the cutting tool 30 is predicted. FIG. 12 shows an example of an anomaly prediction screen. An anomaly prediction screen 510 includes characters, a figure, a color, or a combination of these for making a notification that occurrence of an anomaly in the cutting tool 30 is predicted. In the example in FIG. 12, the anomaly prediction screen 510 includes characters of "An anomaly will occur in the tool soon." Thus, it is possible to notify the user that occurrence of an anomaly in the cutting tool 30 is predicted.

[6. Operation of anomaly detection device]

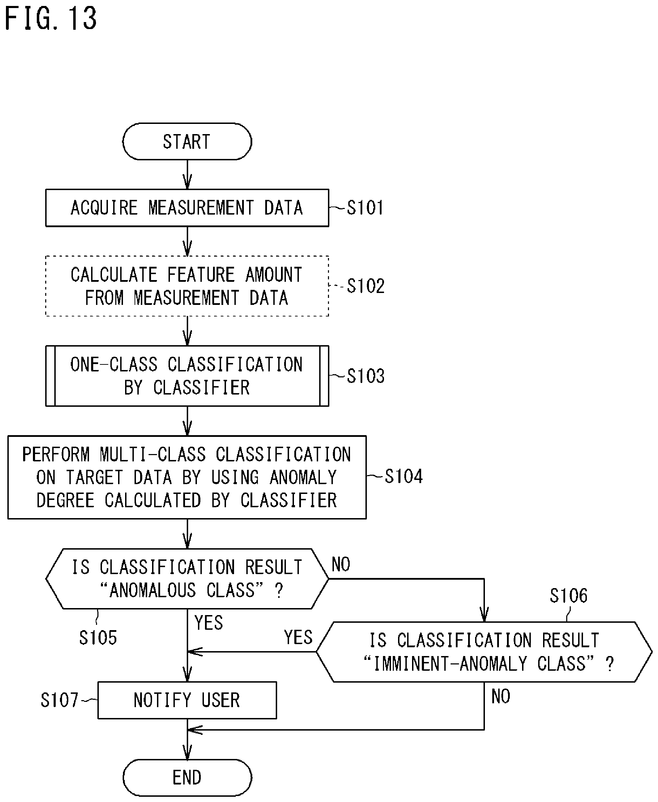

The processor 301 of the anomaly detection device 300 executes the anomaly detection program 307, whereby the processor 301 executes an anomaly detection process described below. FIG. 13 is a flowchart showing an example of the anomaly detection process performed by the anomaly detection device according to the embodiment.

While the cutting tool 30 is used and the workpiece is being subjected to cutting machining with the machine tool 20, the strain sensor 110 measures the strain in the cutting tool 30. The sensor module 100 wirelessly transmits a measurement result obtained by the strain sensor 110 to the anomaly detection device 300. The anomaly detection device 300 receives the measurement result of the strain, and stores the measurement result into the measurement result DB 309. In this manner, measurement data is accumulated in the measurement result DB 309.

The processor 301 acquires measurement data of the strain in the cutting tool 30, from the measurement result DB (step S101).

When the target data is feature data, the processor 301 calculates a feature amount from the measurement value of the acquired measurement data, and generates feature data (step S102). However, when the target data is measurement data, step S102 can be omitted.

Next, the processor 301 executes a classification process (one-class classification) of the target data by the classifier 310 (step S103).

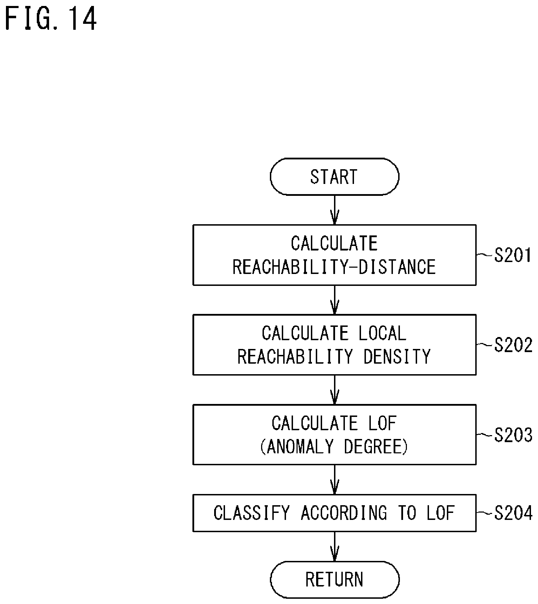

FIG. 14 is a flowchart showing an example of the classification process of the target data. In FIG. 14, a classification process according to LOF is shown.

The processor 301 calculates a reachability-distance by Formula (1) described above (step S201).

The processor 301 calculates a local reachability density by Formula (2) described above (step S202).

The processor 301 calculates LOF (anomaly degree) by Formula (3) described above (step S203).

The processor 301 classifies the target data according to the LOF (step S203). That is, the processor 301 determines whether or not the target data is an outlier (anomalous value). However, when multi-class classification based on the anomaly degree is performed, the result of step S204 is not used. In this case, step S204 may be omitted. Then, the classification process ends.

With reference back to FIG. 13, the processor 301 performs multi-class classification on the target data by using the anomaly degree calculated by the classifier 310 (step S104). That is, the processor 301 compares the anomaly degree with the first threshold and the second threshold, and classifies the target data into the normal class, the imminent-anomaly class, or the anomalous class.

The processor 301 determines whether or not the classification result is the "anomalous class" (step S105). When the classification result is the "anomalous class" (YES in step S105), i.e., an anomaly in the cutting tool 30 has been detected, the processor 301 causes the display device 306 to display the anomaly notification screen 500 (step S107).

When the classification result is not the "anomalous class" (NO in step S105), the processor 301 determines whether or not the classification result is the "imminent-anomaly class" (step S106). When the classification result is the "imminent-anomaly class" (YES in step S106), i.e., when occurrence of an anomaly in the cutting tool 30 has been predicted, the processor 301 causes the display device 306 to display the anomaly prediction screen 510 (step S107).

When the anomaly notification screen 500 or the anomaly prediction screen 510 has been displayed on the display device 306, the anomaly detection process ends. When the classification result is the "normal class" (NO in step S106), the processor 301 ends the anomaly detection process.

[7. Modification]

The target data may include not only data (feature data or measurement data, hereinafter, also referred to as "strain data") based on the measurement data of the strain in the cutting tool 30, but also data (feature data or measurement data, hereinafter, also referred to as "acceleration data") based on the measurement data of acceleration of the cutting tool 30. That is, the target data may be a combination of strain data and acceleration data at an identical time. Acceleration of the cutting tool 30 is measured by an acceleration sensor (not shown) mounted to the spindle of the machine tool 20, for example.

The conversion unit 312 may generate not only feature data of the strain but also feature data of the acceleration. The feature amount of the acceleration is the RMS of the measurement value of the acceleration, for example. Another example of the feature amount of the acceleration is the moving standard deviation of the measurement value of the acceleration. Still another example of the feature amount of the acceleration is a percentile of the measurement value of the acceleration and a specific example thereof is the 95th percentile or the 5th percentile. Still another example of the feature amount of the acceleration is the difference in percentile of the measurement value of the acceleration, and a specific example thereof is the difference between the 95th percentile and the 5th percentile. Still another example of the feature amount of the acceleration is the RMS of a value obtained by filtering the measurement value of the acceleration with a band-pass filter. Still another example of the feature amount of the acceleration is the kurtosis of the measurement value in time series of the acceleration. Still another example of the feature amount of the acceleration is the skewness of the measurement value in time series of the acceleration.

In the embodiment described above, the classifier 310 is a one-class classifier, but is not limited thereto. The classifier 310 may be a multi-class classifier.

The classifier 310 being a multi-class classifier performs multi-class classification of the target data. In a specific example, the classifier 310 classifies the target data into the normal class, the imminent-anomaly class, and the anomalous class. The classifier 310 being a multi-class classifier is constructed through supervised learning.

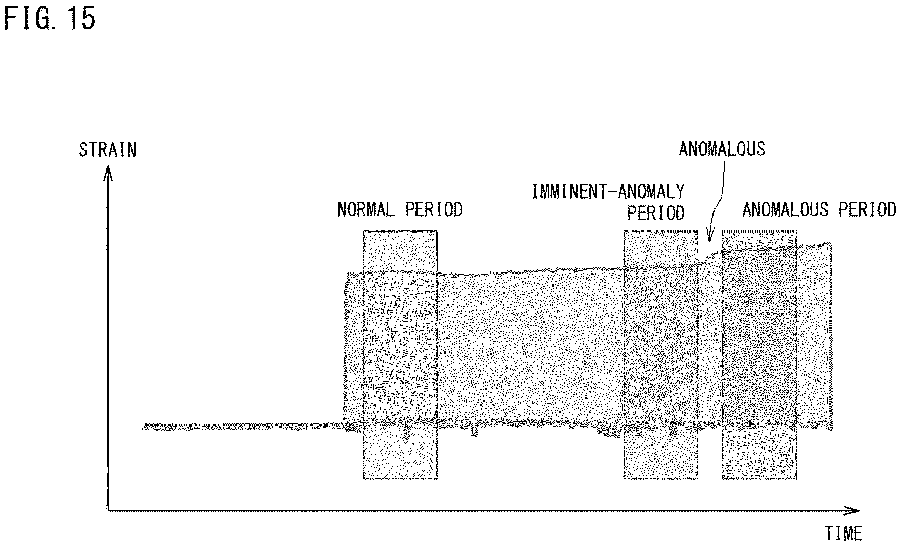

FIG. 15 is a graph for describing an example of a learning period for a multi-class classifier. In FIG. 15, the vertical axis represents strain and the horizontal axis represents time. In learning by the multi-class classifier, measurement data when the cutting tool 30 is in the normal state, measurement data when the cutting tool 30 is in the imminent-anomaly state, and measurement data when the cutting tool 30 is in the anomalous state are used. The learning period is set to a period (normal period) in which the cutting tool 30 is in the normal state, a period (imminent-anomaly period) in which the cutting tool 30 is in the imminent-anomaly state, and a period (anomalous period) in which the cutting tool 30 is in the anomalous state. That is, in the learning by the classifier 310, out of the measurement data stored in the measurement result DB 309, measurement data (or feature data) in the normal period, the imminent-anomaly period, and the anomalous period is used as learning data. Accordingly, the classifier 310 can grasp each of the feature of the measurement data (normal-time data) when the cutting tool 30 is in the normal state, the feature of the measurement data (hereinafter, also referred to as "imminent-anomaly data") when the cutting tool 30 is in the imminent-anomaly state, and the feature of the measurement data (anomalous-time data) when the cutting tool 30 is in the anomalous state, and can distinguish the normal-time data, the imminent-anomaly data, and the anomalous data from each other.

In the embodiment described above, multi-class classification of the target data is performed by using the anomaly degree calculated by the one-class classifier, but the present disclosure is not limited thereto. An anomaly in the cutting tool 30 may be detected by the classifier 310, which is a one-class classifier, detecting an outlier (anomalous data).

In the embodiment described above, a cutting-out period is set in an intermittent cutting step, and an anomaly in the cutting tool in the intermittent cutting step is detected. However, the present disclosure is not limited thereto. The cutting-out period may be set in a continuous machining step, and an anomaly in the cutting tool in the continuous machining step may be detected. Further, a period that includes one or a plurality of intermittent cutting steps and one or a plurality of continuous machining steps may be set as the cutting-out period, and an anomaly in the cutting tool in the cutting-out period may be detected.

[8. Supplementary note]

The above embodiment is merely illustrative in all aspects and is not restrictive. The scope of the present disclosure is defined by the scope of the claims rather than the embodiment described above, and is intended to include meaning equivalent to the scope of the claims and all modifications within the scope.

REFERENCE SIGNS LIST

    10 anomaly detection system
    20 machine tool
    30 cutting tool
    30A, 30B milling tool
    30C, 30D rotating tool
    31A, 31B, 31C, 31D cutting part
    32 cutting insert
    33A, 33B, 33C clamping member
    34, 35 cutting blade
    100 sensor module
    101 processor
    102 nonvolatile memory
    103 volatile memory
    104 communication interface (communication I/F)
    105 battery
    110, 110A, 110B strain sensor
    200 wireless device
    300 anomaly detection device
    301 processor
    302 nonvolatile memory
    303 volatile memory
    304 input/output interface (I/O)
    305 graphics controller
    306 display device
    307 anomaly detection program
    308 reference data
    309 measurement result DB
    310 classifier (classification unit)
    311 input unit
    312 conversion unit
    313 anomaly detection unit

314 output unit
400 workpiece
401 groove
402 circular arc surface
500 anomaly notification screen
510 anomaly prediction screen
A, B, C, D, E, F step
P1, P2, P3, P4, P5, P6 period

**Claims**

1. An anomaly detection system configured to detect an anomaly in a tool mounted to a machine tool, the anomaly detection system comprising:

   a strain sensor configured to measure a strain that occurs in the tool while the machine tool is machining a workpiece by means of the tool; and
   an anomaly detection device configured to detect an anomaly in the tool, based on measurement data obtained by the strain sensor, wherein
   the anomaly detection device includes

   a classification unit being a machine-learned model, the classification unit being configured to use, as an input, target data based on the measurement data obtained by the strain sensor and output a classification result of the target data,
   an anomaly detection unit configured to detect an anomaly in the tool, based on the classification result of the target data by the classification unit, and
   an output unit configured to output a detection result obtained by the anomaly detection unit.

2. The anomaly detection system according to claim 1, wherein
   the strain sensor is mounted to the tool.

3. The anomaly detection system according to claim 2, wherein

   the tool is a cutting tool including a milling tool or a rotating tool, and
   the cutting tool comprises the strain sensor and a wireless communication unit configured to wirelessly transmit the measurement data obtained by the strain sensor.

4. The anomaly detection system according to any one of claims 1 to 3, wherein

   the classification unit is a one-class classification unit configured to perform one-class classification, and
   the anomaly detection unit detects an anomaly in the tool, based on an anomaly degree generated in the one-class classification.

5. The anomaly detection system according to claim 4, wherein
   the anomaly detection unit compares the anomaly degree with a plurality of thresholds to perform multi-class classification of the target data, and detects an anomaly in the tool, based on a result of the multi-class classification.

6. The anomaly detection system according to claim 5, wherein
   the anomaly detection unit compares the anomaly degree with a first threshold and a second threshold, to classify the target data into a normal state, an imminent-anomaly state, and an anomalous state.

7. The anomaly detection system according to claim 6, wherein
   when the target data has been classified into the anomalous state by the anomaly detection unit, the output unit outputs information for making a notification that the tool is anomalous.

8. The anomaly detection system according to claim 6, wherein
   when the target data has been classified into the imminent-anomaly state by the anomaly detection unit, the output unit outputs information for making a notification that occurrence of an anomaly in the tool is predicted.

9. The anomaly detection system according to any one of claims 6 to 8, wherein
the first threshold for distinguishing the target data between the normal state and the imminent-anomaly state is determined based on target data based on measurement data obtained by the strain sensor just before the tool becomes anomalous.

10. The anomaly detection system according to any one of claims 1 to 9, wherein
the anomaly detection device detects an anomaly in the tool, based on measurement data of a strain in the tool in an intermittent cutting step in which cutting and non-cutting of the workpiece are repeated.

11. An anomaly detection device configured to detect an anomaly in a tool mounted to a machine tool, the anomaly detection device comprising:

an acquisition unit configured to acquire target data based on measurement data outputted from a strain sensor configured to measure a strain that occurs in the tool while the machine tool is machining a workpiece by means of the tool;
a classification unit being a machine-learned model, the classification unit being configured to use, as an input, the target data acquired by the acquisition unit and output a classification result of the target data;
an anomaly detection unit configured to detect an anomaly in the tool, based on the classification result of the target data by the classification unit; and
an output unit configured to output a detection result obtained by the anomaly detection unit.

12. An anomaly detection method to be executed by an anomaly detection device configured to detect an anomaly in a tool mounted to a machine tool, the anomaly detection method comprising:

a step of acquiring target data based on measurement data outputted from a strain sensor configured to measure a strain that occurs in the tool while the machine tool is machining a workpiece by means of the tool;
a step of classifying the target data by a classification unit being a machine-learned model, the classification unit being configured to use, as an input, the target data having been acquired and output a classification result of the target data;
a step of detecting an anomaly in the tool, based on the classification result of the target data by the classification unit; and
a step of outputting a detection result of the anomaly in the tool.

13. A computer program for detecting an anomaly in a tool mounted to a machine tool, the computer program causing a computer to execute:

a step of acquiring target data based on measurement data outputted from a strain sensor configured to measure a strain that occurs in the tool while the machine tool is machining a workpiece by means of the tool;
a step of classifying the target data by using a classification unit being a machine-learned model, the classification unit being configured to use, as an input, the target data having been acquired and output a classification result of the target data;
a step of detecting an anomaly in the tool, based on the classification result of the target data by the classification unit; and
a step of outputting a detection result of the anomaly in the tool.

FIG. 1

FIG. 2A

FIG. 2B

FIG. 2C

30C

100

SENSOR MODULE

31C

33C

33C

32

32

FIG. 2D

30D

100

SENSOR MODULE

31D

# FIG. 3

# FIG. 4

302

```
┌─────────────────────────┐
│   NONVOLATILE           │
│     MEMORY              │
│  ┌───────────────────┐  │
│  │     ANOMALY       │  │
│  │    DETECTION      │  │  307
│  │    PROGRAM        │  │
│  └───────────────────┘  │
│  ┌───────────────────┐  │
│  │    CLASSIFIER     │  │  310
│  └───────────────────┘  │
│                         │
│  ┌───────────────────┐  │
│  │   MEASUREMENT     │  │
│  │     RESULT        │  │
│  │      DB           │  │
│  └───────────────────┘  │
└─────────────────────────┘
```

300

301 PROCESSOR

303 VOLATILE MEMORY

309

304 I/O

305 GRAPHICS CONTROLLER

306 DISPLAY DEVICE

# FIG. 5

311 — INPUT UNIT

309 — MEASUREMENT RESULT DB

312 — CONVERSION UNIT

310 — CLASSIFIER

313 — ANOMALY DETECTION UNIT

314 — OUTPUT UNIT

FIG. 6

FIG. 7

FIG. 8A

FIG. 8B

FIG. 9

EP 4 570 429 A1

FIG. 10

FIG.11

500

AN ANOMALY HAS OCCURRED
IN THE TOOL.

FIG. 12

510

AN ANOMALY WILL OCCUR
IN THE TOOL SOON.

# FIG. 13

```
                    ┌─────────────┐
                    │    START    │
                    └──────┬──────┘
                           ▼
        ┌──────────────────────────────────┐
        │     ACQUIRE MEASUREMENT DATA      ├─ S101
        └──────────────────┬───────────────┘
                           ▼
        ┌ ─ ─ ─ ─ ─ ─ ─ ─ ─ ─ ─ ─ ─ ─ ─ ─ ─┐
        │      CALCULATE FEATURE AMOUNT      ┆─ S102
        │       FROM MEASUREMENT DATA        ┆
        └ ─ ─ ─ ─ ─ ─ ─ ─ ┬ ─ ─ ─ ─ ─ ─ ─ ─ ┘
                           ▼
        ┌──────────────────────────────────┐
        │     ONE-CLASS CLASSIFICATION      ├─ S103
        │           BY CLASSIFIER           │
        └──────────────────┬───────────────┘
                           ▼
    ┌──────────────────────────────────────────┐
    │  PERFORM MULTI-CLASS CLASSIFICATION       │
    │  ON TARGET DATA BY USING ANOMALY          ├─ S104
    │  DEGREE CALCULATED BY CLASSIFIER          │
    └──────────────────────┬───────────────────┘
                           ▼
```

IS CLASSIFICATION RESULT "ANOMALOUS CLASS" ? — S105 — NO

IS CLASSIFICATION RESULT "IMMINENT-ANOMALY CLASS" ? — S106

YES

YES

NO

NOTIFY USER — S107

END

FIG. 14

```
        ┌──────────────┐
        │    START     │
        └──────┬───────┘
               │
               ▼
   ┌───────────────────────┐
   │       CALCULATE       │
   │  REACHABILITY-DISTANCE │── S201
   └───────────┬───────────┘
               │
               ▼
   ┌───────────────────────┐
   │    CALCULATE LOCAL    │
   │  REACHABILITY DENSITY  │── S202
   └───────────┬───────────┘
               │
               ▼
   ┌───────────────────────┐
   │     CALCULATE LOF     │
   │    (ANOMALY DEGREE)    │── S203
   └───────────┬───────────┘
               │
               ▼
   ┌───────────────────────┐
   │ CLASSIFY ACCORDING TO LOF │── S204
   └───────────┬───────────┘
               │
               ▼
        ┌──────────────┐
        │    RETURN     │
        └──────────────┘
```

FIG. 15

STRAIN

NORMAL PERIOD

IMMINENT-ANOMALY
PERIOD

ANOMALOUS

ANOMALOUS PERIOD

TIME

EP 4 570 429 A1

## INTERNATIONAL SEARCH REPORT

| International application No. |
| --- |
| **PCT/JP2022/030298** |

| | |
| --- | --- |
| **A.** | **CLASSIFICATION OF SUBJECT MATTER** |
| | ***B23Q 17/09***(2006.01)i |
| | FI: B23Q17/09 C |

According to International Patent Classification (IPC) or to both national classification and IPC

| | |
| --- | --- |
| **B.** | **FIELDS SEARCHED** |

Minimum documentation searched (classification system followed by classification symbols)

    B23Q17/09

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2022-20722 A (SUMITOMO ELECTRIC INDUSTRIES, LTD.) 01 February 2022 (2022-02-01) <br>     paragraphs [0018]-[0212], fig. 1-26 | 1-5, 10-13 |
| A | | 6-9 |
| A | WO 2021/157518 A1 (SUMITOMO ELECTRIC INDUSTRIES, LTD.) 12 August 2021 (2021-08-12) <br>     paragraphs [0013]-[0273] | 1-13 |
| A | JP 7036292 B1 (SUMITOMO ELECTRIC INDUSTRIES, LTD.) 15 March 2022 (2022-03-15) <br>     paragraphs [0015]-[0243] | 1-13 |
| A | JP 2018-24055 A (MITSUBISHI HEAVY INDUSTRIES MACHINE TOOL CO., LTD.) 15 February 2018 (2018-02-15) <br>     paragraphs [0023]-[0093] | 1-13 |
| A | US 2021/0260777 A1 (LANDWEHR, Thomas Jay) 26 August 2021 (2021-08-26) <br>     fig. 1 | 1-13 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 August 2022** | **06 September 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/030298**

| Patent document cited in search report | | | Publication date (day/month/year) | Patent family member(s) | Publication date (day/month/year) |
|---|---|---|---|---|---|
| JP | 2022-20722 | A | 01 February 2022 | (Family: none) | |
| WO | 2021/157518 | A1 | 12 August 2021 | (Family: none) | |
| JP | 7036292 | B1 | 15 March 2022 | (Family: none) | |
| JP | 2018-24055 | A | 15 February 2018 | US 2019/0210176 A1 paragraphs [0052]-[0134] CN 109562500 A | |
| US | 2021/0260777 | A1 | 26 August 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018024055 A